# EUROPÄISCHE PATENTSCHRIFT

(11) **EP 1 924 496 B1**
(45) Veröffentlichungstag und Bekanntmachung des Hinweises auf die Patenterteilung: **25.03.2009**
(21) Anmeldenummer: 06792072.8
(22) Anmeldetag: 14.09.2006
(51) Int. Cl.: B64C 39/10, B64D 25/08

(54) **EINRICHTUNG ZUR NOT-EVAKUIERUNG, INSBESONDERE FÜR EIN NURFLÜGEL-FLUGZEUG**
EMERGENCY EVACUATION SYSTEM, IN PARTICULAR FOR A TAILLESS AEROPLANE
DISPOSITIF D'EVACUATION D'URGENCE, NOTAMMENT POUR UN AVION SANS QUEUE

(30) Priorität: 17.09.2005 DE 102005044535
(43) Veröffentlichungstag der Anmeldung: 28.05.2008
(73) Patentinhaber: Airbus Deutschland GmbH, 21129 Hamburg (DE)
(72) Erfinder: ANGER, André, 22559 Hamburg (DE); SCHÖNE, Wolfram, 21614 Buxtehude (DE)
(74) Vertreter: Kopf, Korbinian Paul
(86) Internationale Anmeldenummer: PCT/EP2006/008978
(87) Internationale Veröffentlichungsnummer: WO 2007/031320

(56) Entgegenhaltungen:
- EP-A1- 1 099 626
- EP-A1- 1 209 077
- EP-B1- 1 032 746
- DE-A1- 19 757 025

## Beschreibung

Die Erfindung betrifft eine Einrichtung zur Not-Evakuierung von Personen von einem ersten Niveau auf wahlweise ein oberhalb des ersten Niveaus befindliches zweites Niveau oder ein unterhalb des ersten Niveaus befindliches drittes Niveau, wie im Oberbegriff des Anspruchs 1 vorausgesetzt.

Stand der Technik sind Verkehrsflugzeuge mit einer mehr oder weniger zylindrisehen Druckkabine, die zur Umgebung durch Passagiertüren abgeschlossen ist. Im Evakuierungsfall muß nachgewiesen werden, dass die Passagiere durch die geöffneten Türen einer Flugzeugseite via Notrutschen innerhalb von 90 sec vom Flugzeug ins Freie gelangen können.

Bei Notwasserungen bleibt das Flugzeug im idealen Fall durch das unterhalb der Passagierkabine vorhandene Volumen für einen definierten Zeitraum in der Weise schwimmfähig, dass sich die Unterkanten der Notausstiege oberhalb der Wasserfläche befinden. In diesem Zeitraum ist ein Verlassen des Flugzeuges über die Notrutschen bzw. ein Übersteigen in Boote oder Rettungsinseln möglich.

Vorbekannte Lösungen weisen keine Fluchtwegoptionen nach oben oder unten auf, weil die Notwendigkeit dafür bei konventionellen Konfigurationen nicht gegeben ist.

Bezüglich der Not-Evakuierung besteht zwischen den bekannten, konventionellen Verkehrsflugzeugen und gemäß neueren Entwürfen vorgesehenen unkonventionellen Nurflügel-Flugzeugen, auch "Blended Wing Bodies" oder "schwanzlose" Flugzeuge genannt, ein wesentlicher Unterschied darin, dass bei letzteren für den größeren Teil der vorzusehenden Not-Evakuierungstüren oder -luken kein direkter Zugang von der Passagierkabine zur Außenwelt besteht, weil aus strukturellen Gründen nicht das gesamte Flügelvolumen sinnvoll als Druckkabine ausgebildet werden kann.

Ein Stand der Technik ist durch EP 1 209 077 A1 gegeben.

Die Aufgabe der Erfindung ist es, eine verbesserte Not-Evakuierungseinrichtung zu schaffen. Insbesondere soll eine Einrichtung zur Not-Evakuierung von Personen von einem ersten Niveau auf wahlweise ein oberhalb des ersten Niveaus befindliches zweites Niveau oder ein unterhalb des ersten Niveaus befindliches drittes Niveau geschaffen werden, die einfach und platzsparend aufgebaut ist.

Die Aufgabe durch eine Einrichtung mit den Merkmalen des Anspruchs 1 gelöst.

Vorteilhafte Weiterbildungen und Ausführungsformen der erfindungsgemäßen Einrichtung sind in den Unteransprüchen angegeben.

Durch die Erfindung wird eine Einrichtung zur Not-Evakuierung von Personen von einem ersten Niveau auf wahlweise ein oberhalb des ersten Niveaus befindliches zweites Niveau oder ein unterhalb des ersten Niveaus befindliches drittes Niveau geschaffen, wobei die Einrichtung für das Evakuieren auf das obere Niveau eine Anordnung in Form einer Treppe aufweist. Erfindungsgemäß ist es vorgesehen, dass die Einrichtung an einem Ende mit dem ersten Niveau verbunden und mit dem anderen Ende zwischen dem oberen Niveau und dem unteren Niveau oder umgekehrt verlagerbar ist und für das Evakuieren auf das untere Niveau in die Form einer Rutsche veränderbar ist.

Gemäß einer bevorzugten Ausführungsform der Erfindung ist die Einrichtung an einem Ende mit einem Fußpunkt drehbar gelenkig an dem ersten Niveau gelagert und mit dem anderen Ende zwischen dem oberen Niveau und dem unteren Niveau oder umgekehrt schwenkbar.

Gemäß einer bevorzugten Ausführungsform der Erfindung hat die Einrichtung an gegenüberliegenden Längsseiten befindliche Wangen und zwischen den Wangen angeordnete Stufenelemente aufweist, wobei die Stufenelemente für das Evakuieren auf das obere Niveau eine Anordnung in Form einer Treppe aufweisen, und wobei für das Evakuieren auf das untere Niveau die Einrichtung zwischen den Wangen in die Form einer Rutsche veränderbar ist.

Gemäß einer bevorzugten Ausführungsform der Erfindung sind die Stufenelemente jeweils in ihrer Konfiguration veränderbar ausgebildet, wobei die für das Evakuieren auf das untere Niveau vorgesehene Rutsche unter Veränderung von deren Konfiguration durch die Stufenelemente gebildet wird.

Gemäß einer vorteilhaften Ausführungsform umfassen die Stufenelemente jeweils Trittstufen und Setzstufen, die beweglich zueinander und beweglich gegenüber den Wangen gelagert und zum Bilden der Rutsche aus der Konfiguration von Stufen in eine eine geschlossene, glatte Fläche bildende Konfiguration veränderbar sind.

Hierbei sind vorzugsweise die Wangen zum Ausgleich von beim Verändern der Konfiguration der Stufen in die die geschlossene, glatte Fläche bildende Konfiguration auftretenden Längenunterschieden in ihrer Länge veränderbar.

Gemäß einer Ausführungsform der Erfindung umfassen die Wangen zur Veränderung ihrer Länge mehrere teleskopartig zusammenwirkende Elemente.

Gemäß einer anderen Ausführungsform der Erfindung sind die Wangen zur Veränderung ihrer Länge scherenartig ausgebildet.

Die Trittstufen und Setzstufen können durch Scharniergelenke miteinander verbunden und in Gleitbahnen beweglich gegenüber den Wangen gelagert sein.

Die Trittstufen und Setzstufen können durch Scharniergelenke miteinander verbunden und in Drehgelenken beweglich gegenüber den Wangen sein.

Gemäß einer anderen vorteilhaften Ausführungsform der Erfindung umfassen die Stufenelemente jeweils nur Trittstufen, die beweglich gegenüber den Wangen gelagert und zum Bilden der Rutsche aus der Konfiguration von Stufen in eine eine geschlossene, glatte Fläche bildende Konfiguration veränderbar sind.

Gemäß einer vorteilhaften Ausführungsform der Erfindung ist die Einrichtung mittels einer Verriegelungsvorrichtung an dem einen Niveau verriegelt und nach Lösen der Verriegelungsvorrichtung von dem einen Niveau zu dem anderen Niveau verlagerbar.

Hierbei ist es vorzugsweise insbesondere vorgesehen, dass die Einrichtung mit einer ihre Verlagerungsbewegung hemmenden Brems- oder Dämpfungsvorrichtung und/oder mit einer ihrem Eigengewicht entgegenwirkenden, insbesondere feder- oder gasdruckbelasteten, Balanceeinrichtung gekoppelt und nach Lösen der Verriegelungsvorrichtung von dem einen Niveau zu dem anderen Niveau verlagerbar ist.

Gemäß einer vorteilhaften Ausführungsform der Erfindung ist die Einrichtung mittels einer Verriegelungsvorrichtung an dem oberen Niveau verriegelt und nach Lösen der Verriegelungsvorrichtung von dem oberen Niveau zu dem unteren Niveau verlagerbar.

Hierbei kann es vorzugsweise insbesondere vorgesehen sein, dass die Einrichtung nach Lösen der Verriegelungsvorrichtung durch ihr Eigengewicht von dem oberen Niveau zu dem unteren Niveau verlagerbar ist.

Gemäß einer vorteilhaften Ausführungsform der Erfindung ist die Einrichtung nach Lösen der Verriegelungsvorrichtung durch Federkraft oder durch eine hydraulische oder pneumatische Betätigungseinrichtung von dem einen Niveau zu dem anderen Niveau verlagerbar ist.

Gemäß einer besonders vorteilhaften Ausführungsform der Erfindung ist die Einrichtung zur Not-Evakuierung von Personen von einem das erste Niveau bildenden Deck, insbesondere Passagierdeck eines Nurflügel-Flugzeugs auf wahlweise die das zweite, obere Niveau bildende Oberseite des Nurflügel-Flugzeugs oder die das dritte, untere Niveau bildende Unterseite des Nurflügel-Flugzeugs vorgesehen, wobei die Einrichtung an ihrem einem Ende mit dem Deck verbunden und mit dem anderen Ende wahlweise zwischen der Oberseite und der Unterseite oder umgekehrt verlagerbar ist.

Hierbei kann es vorzugsweise insbesondere vorgesehen sein" dass die Einrichtung in der nicht druckbelüfteten Flügelstruktur des Nurflügel-Flugzeugs angeordnet ist und durch eine in der Druckband der Kabine vorgesehene Luke zugänglich ist und wahlweise einen Evakuierungsweg von dem Deck zu einer an der Oberseite des Nurflügel-Flugzeugs vorgesehenen oberen Ausstiegsluke oder einer an der Unterseite des Nurflügel-Flugzeugs vorgesehenen unteren Ausstiegsluke bildet.

Gemäß einer vorteilhaften Weiterbildung der Erfindung ist an der unteren Ausstiegsluke eine die Rutsche der Einrichtung nach unten fortsetzende aufblasbare weitere Rutsche vorgesehen ist.

Im Folgenden wird ein Ausführungsbeispiel der Erfindung anhand der Zeichnung erläutert.

Es zeigt:
- Fig. 1: eine schematische Darstellung der im Mittelflügelbereich integrierten Druckkabine bei einem Nurflügel-Verkehrsflugzeug mit angrenzenden, nichtdruckbelüfteten Flügelbereichen (transparent);
- Fig. 2: eine schematische Darstellung einer Not-Evakuierungseinrichtung gemäß einem Ausführungsbeispiel der Erfindung, welche eine Kombination von Treppen- und Rutschenfunktion in sich vereint;
- Fig. 3a) und b): räumliche perspektivische Darstellungen der erfindungsgemäßen Not-Evakuierungseinrichtung (exemplarisch für eine Tür an der Hinterseite des in Fig. 1 gezeigten Nurflügel-Flugzeugs) in "Grundstellung" als Treppe, Fig. 3a), und niedergeschwenkt, als starre Rutsche, Fig. 3b).

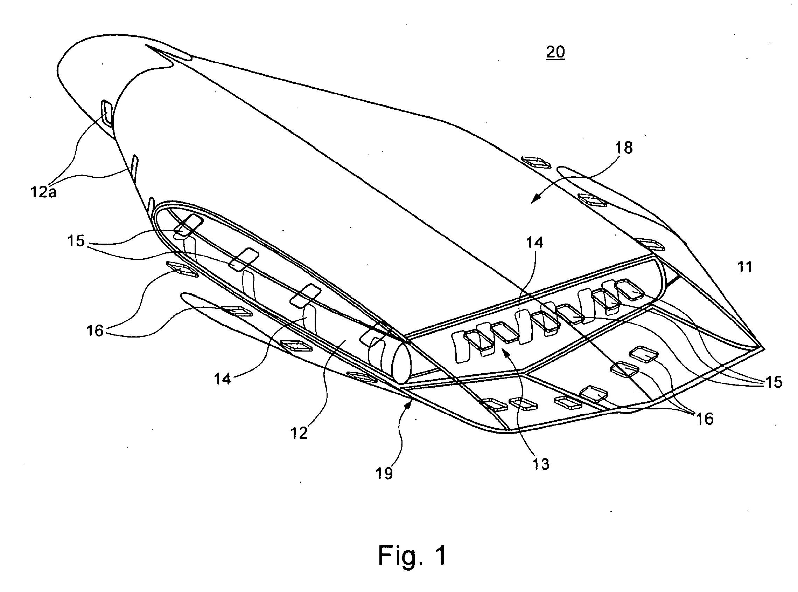

Fig. 1 zeigt schematisch eine in den Zentralflügel 11 eines Nurflügel-Flugzeugs 20 integrierte Druckkabine 12. Wie man sieht, gestatten nur die Türen 12a an der Vorderseite der Kabine 12 den direkten Ausgang ins Freie. An den Seiten und im hinteren Bereich dagegen schließt sich die nicht druckbelüftete Flügelstruktur 11 an die - wie hier gezeigt - sphärischen Druckwände 13 der Kabine 12 an. Damit eine genügende Not-Evakuierungskapazität gewährleistet ist, sind also pro Notausstiegsposition in der Kabine 12 in diesen Bereichen zusätzliche Notausstiegstüren bzw. -luken, nämlich obere Ausstiegsluken 15 und untere Ausstiegsluken 16, ins Freie in der Außenhaut des Flugzeugs 20 vorzusehen.

Da bei Notwasserungen wesentliche Teile der Unterseite des Flügels 11 (und damit auch der unter en Ausstiegstüren 16) unter Wasser liegen, kann ein sicheres Verlassen des Flugzeuges nur durch Ausstiege auf der Flügeloberseite gewährleistet werden. Auch auf dem Lande kann in bestimmten Havariesituationen (z.B. durch Bruch von Fahrwerken etc.) eine Situation eintreten, in der das Verlassen des Flugzeuges 20 über Rutschen durch die nach unten weisenden Notausstiegsluken 16 in den nichtdruckbelüfteten Flügelsektionen neben und hinter der Kabine nicht mehr möglich ist. Das macht die Verfügbarkeit entsprechender Treppen nach oben erforderlich.

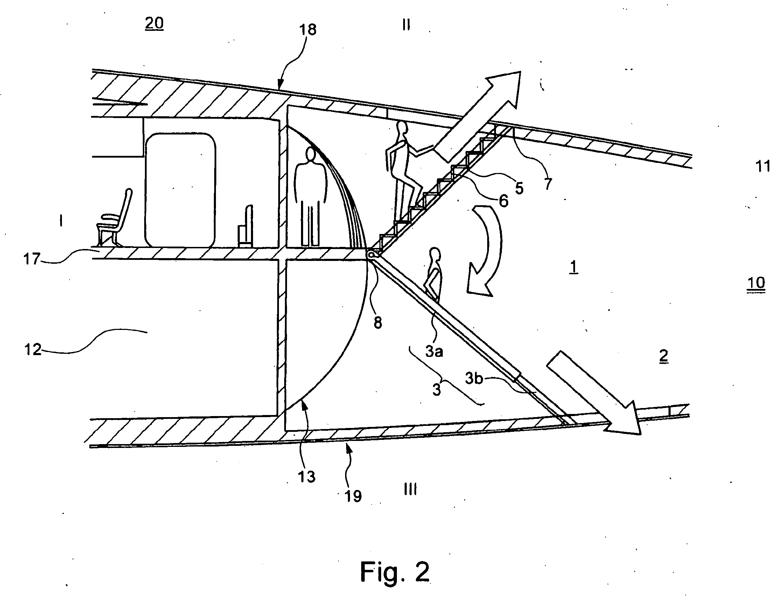

Fig. 2 eine schematische Darstellung einer Not-Evakuierungseinrichtung gemäß einem Ausführungsbeispiel der Erfindung, wobei ein Flugeugquerschnitt mit der erfindungsgemäßen Not-Evakuierungseinrichtung gezeigt ist, die wahlweise eine Treppenfunktion 1 zur Oberseite und eine Rutschenfunktion 2 zur Unterseite leistet. Sie umfasst auf eine Treppe 1, die an ihrem Fußpunkt 8 gelenkig gelagert ist und an ihrer Oberseite 18 eine Verriegelung 7 an einer Auftrittsfläche aufweist, die bei Bedarf schnell lösbar ist.

Die Not-Evakuierungseinrichtung 10 des hier gezeigten Ausführungsbeispiels dient also einer Not-Evakuierung von Personen von einem ein erstes Niveau I bildenden Deck, insbesondere Passagierdeck 17 des Nurflügel-Flugzeugs 20 auf wahlweise die ein zweites, oberes Niveau II bildende Oberseite 18 des Nurflügel-Flugzeugs 20 oder die ein drittes, unteres Niveau III bildende Unterseite 19 des Nurflügel-Flugzeugs 20. Die Not-Evakuierungseinrichtung 10 ist an ihrem einem Ende mit dem Deck 7 verbunden und mit dem anderen Ende wahlweise zwischen der Oberseite 18 und der Unterseite 19 (oder umgekehrt) verlagerbar.

Die Not-Evakuierungseinrichtung 10 ist in der nicht druckbelüfteten Flügelstruktur 11 des Nurflügel-Flugzeugs 20 angeordnet und durch eine in der Druckwand 13 der Kabine 12 vorgesehene Luke 14 zugänglich und bildet wahlweise einen Evakuierungsweg von dem Deck 17 zu der an der Oberseite 18 des Flugzeugs 20 vorgesehenen oberen Ausstiegsluke 15 oder der an der Unterseite 19 desselben vorgesehenen unteren Ausstiegsluke 16.

Die Not-Evakuierungseinrichtung 10 weist an gegenüberliegenden Längsseiten befindliche Wangen 3, 4 und zwischen den Wangen angeordnete Stufenelemente 5, 6 auf, wobei die Stufenelemente 5, 6 für das Evakuieren auf das obere Niveau II eine Anordnung in Form einer Treppe 1 aufweisen, und wobei für das Evakuieren auf das untere Niveau III die Einrichtung 1 zwischen den Wangen 3, 4 in die Form einer Rutsche 2 veränderbar ist. Bei dem hier beschriebenen Ausführungsbeispiel sind die Stufenelemente 5, 6 jeweils in ihrer Konfiguration veränderbar ausgebildet, wobei die für das Evakuieren auf das untere Niveau III vorgesehene Rutsche 2 unter Veränderung von deren Konfiguration durch die Stufenelemente 5, 6 gebildet wird. Die Stufenelemente 5, 6 umfassen jeweils Trittstufen 5 und Setzstufen 6, die beweglich zueinander und beweglich gegenüber den Wangen 3, 4 gelagert und zum Bilden der Rutsche 2 aus der Konfiguration von Stufen in eine eine geschlossene, glatte Fläche bildende Konfiguration veränderbar sind. Die Wangen 3, 4 sind zum Ausgleich von beim Verändern der Konfiguration der Stufen 5, 6 in die die geschlossene, glatte Fläche bildende Konfiguration auftretenden Längenunterschieden in ihrer Länge veränderbar und umfassen mehrere teleskopartig zusammenwirkende Elemente 3a, 3b, 4a, 4b. Die Trittstufen 5 und Setzstufen 6 sind durch Scharniergelenke miteinander verbunden und in Gleitbahnen beweglich gegenüber den Wangen 3, 4 gelagert.

Alternativ könnten die Wangen 3, 4 zur Veränderung ihrer Länge scherenartig ausgebildet und die Trittstufen 5 und Setzstufen 6 in Drehgelenken beweglich gegenüber den Wangen 3, 4 gelagert sein.

Gemäß noch einer anderen alternativen Ausführungsform könnten die Stufenelemente jeweils nur Trittstufen-5 umfassen, die beweglich gegenüber den Wangen 3, 4 gelagert und zum Bilden der Rutsche 2 aus der Konfiguration von Stufen in eine eine geschlossene, glatte Fläche bildende Konfiguration veränderbar sind. Die Wangen 3, 4 könnten dann eine feste Länge aufweisen.

Die Not-Evakuierungseinrichtung 10 ist mit einer ihre Verlagerungsbewegung hemmenden Brems- oder Dämpfungsvorrichtung und/oder mit einer ihrem Eigengewicht entgegenwirkenden, insbesondere feder- oder gasdruckbelasteten, Balanceeinrichtung (nicht dargestellt) gekoppelt und mittels einer Verriegelungsvorrichtung 7 an dem oberen Niveau II verriegelt und nach Lösen der Verriegelungsvorrichtung 7 von dem oberen Niveau II zu dem unteren Niveau III verschwenkbar.

Das Verschwenken der Not-Evakuierungseinrichtung 10 nach Lösen der Verriegelungsvornchtung 7 von dem oberen Niveau II zu dem unteren Niveau III erfolgt durch ihr Eigengewicht, durch Federkraft oder durch eine hydraulische oder pneumatische Betätigungseinrichtung oder durch eine Kombination davon.

An der unteren Ausstiegsluke 16 kann zusätzlich eine die durch die Not-Evakuierungseinrichtung 10 gebildete Rutsche 2 nach unten fortsetzende aufblasbare weitere Rutsche vorgesehen sein.

Auf diese Weise wird ein System geschaffen, das sowohl die Funktion einer Treppe 1 zu einer höher gelegenen Plattform als auch die einer Notrutsche 2 zu einer tieferen in sich vereint.

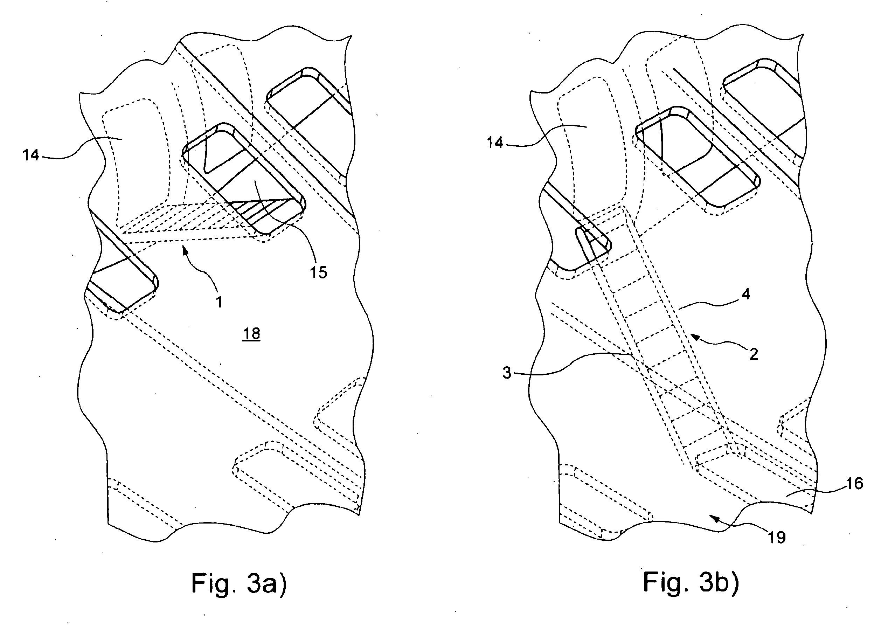

Fig. 3a) zeigt links exemplarisch eine Ansicht von hinten oben auf die Treppe 1, wie sie hinter der Kabine 12 auf die Oberseite 18 des nichtdruckbelüfteten Mittelsegments des Flügels 11 führt.

Fig. 3b) illustriert das Aussehen der erfindungsgemäßen Not-Evakuierungseinrichtung 10 an derselben Position in herabgeschwenkter Stellung, nun als starre Notrutsche 2 zur entsprechenden Tür 16 auf der Unterseite 19 des nichtdruckbelüfteten Flügelbereichs hinter der Kabine 12 führend. Einbau und Funktionsprinzip in den nichtdruckbelüfteten Flügelbereichen seitlich neben der Kabine 12 sind entsprechend.

Durch die Erfindung wird ein neuartiges Treppe/Rutsche-Rettungssystem geschaffen, das sowohl eine Notevakuierung auf ein Niveau II oberhalb der Passagierebene I als auch ein Niveau III unterhalb dieser gewährleistet, wie es für Notwasserung bzw. Notlandung von unkonventionellen Nurflügel-Flugzeugen erforderlich ist - bisher aber noch bei keinem Verkehrsflugzeug realisiert wurde.

Ein weiterer Vorteil der Erfindung besteht darin, dass an jeder vorhandenen Passagiertür ein solches System installiert werden kann, das im Notfall eindeutig und unverwechselbar nach oben oder unten führt.

Eine Trennung von bekannten Treppen- und Rutschenfunktion, wie sie bei heute existierenden Mehrdeck-Konfigurationen (B747 oder A380) realisiert sind, würde bei unkonventionellen Flugzeugen der beschriebenen Art mindestens die doppelte Anzahl von festeingebauten konstruktiven Elementen pro Notausgangsposition erfordern. Somit bietet die Erfindung einen erheblichen Gewichtsvorteil bei optimaler Nutzung des zur Verfügung stehenden Einbauraumes und gleichzeitig erhöhter Sicherheit.

Die in der Normalstellung an dem oberen Niveau II verriegelte Treppe 1 bildet bei Entriegelung eine stabile Rutsche 2, welche nicht erst mit Pressluft aufgeblasen werden muß, um ausreichende Steifigkeit zu erlangen, wie das bei heutigen Notrutschen der Fall ist.

Weitere Anwendungsgebiete der exemplarisch an einem Nurflügel-Flugzeug 20 beschriebenen Erfindung sind selbstverständlich denkbar. So ist eine Verwendung z.B. auch in Rettungswachen (Feuerwehr), auf Schiffen oder Notausgängen in Wohnhäusern, Hotels, Türmen u.s.w. möglich.

### Bezugszeichenliste

- 1: Treppe
- 2: Rutsche
- 3: Wange
- 3a, 3b: Wangenelement
- 4: Wange
- 4a, 4b: Wangenelement
- 5: Stufenelement, Trittstufe
- 6: Stufenelement, Setzstufe
- 7: Verriegelungseinrichtung
- 8: Fußpunkt
- 10: Not-Evakuierungseinrichtung
- 11: Flügelstruktur
- 12: Kabine
- 12a: Kabinentür
- 13: Druckwand
- 14: Luke
- 15: obere Ausstiegsluke
- 16: untere Austsiegsluke
- 17: Passagierdeck
- 18: Oberseite
- 19: Unterseite
- 20: Nurflügel-Flugzeug

## Patentansprüche

1. Einrichtung zur Not-Evakuierung von Personen von einem ersten Niveau (I) auf wahlweise ein oberhalb des ersten Niveaus (I) befindliches zweites Niveau (II) oder ein unterhalb des ersten Niveaus befindliches drittes Niveau (III), wobei die Einrichtung für das Evakuieren auf das obere Niveau (II) eine Anordnung in Form einer Treppe (1) aufweist, wobei die Einrichtung an einem Ende mit dem ersten Niveau (I) verbunden und mit dem anderen Ende zwischen dem oberen Niveau (II) und dem unteren Niveau (III) oder umgekehrt verlagerbar ist und für das Evakuieren auf das untere Niveau (III) in die Form einer Rutsche (2) veränderbar ist.

2. Not-Evakuierungseinrichtung nach Anspruch 1, **dadurch gekennzeichnet, dass** die Einrichtung an einem Ende mit einem Fußpunkt (8) drehbar gelenkig an dem ersten Niveau (I) gelagert und mit dem anderen Ende zwischen dem oberen Niveau (II) und dem unteren Niveau (III) oder umgekehrt schwenkbar ist.

3. Not-Evakuierungseinrichtung nach Anspruch 2, **dadurch gekennzeichnet, dass** die Einrichtung an gegenüberliegenden Längsseiten befindliche Wangen (3, 4) und zwischen den Wangen angeordnete Stufenelemente (5, 6) aufweist, wobei die Stufenelemente (5, 6) für das Evakuieren auf das obere Niveau (II) eine Anordnung in Form einer Treppe (1) aufweisen, und wobei für das Evakuieren auf das untere Niveau (III) die Einrichtung (1) zwischen den Wangen (3, 4) in die Form einer Rutsche (2) veränderbar ist.

4. Not-Evakuierungseinrichtung nach Anspruch 3, **dadurch gekennzeichnet, dass** die Stufenelemente (5, 6) jeweils in ihrer Konfiguration veränderbar ausgebildet sind, wobei die für das Evakuieren auf das untere Niveau (III) vorgesehene Rutsche (2) unter Veränderung von deren Konfiguration durch die Stufenelemente (5, 6) gebildet wird.

5. Not-Evakuierungseinrichtung nach Anspruch 4, **dadurch gekennzeichnet, dass** die Stufenelemente (5, 6) jeweils Trittstufen (5) und Setzstufen (6) umfassen, die beweglich zueinander und beweglich gegenüber den Wangen (3, 4) gelagert und zum Bilden der Rutsche (2) aus der Konfiguration von Stufen in eine eine geschlossene, glatte Fläche bildende Konfiguration veränderbar sind.

6. Not-Evakuierungseinrichtung nach Anspruch 5, **dadurch gekennzeichnet, dass** die Wangen (3, 4) zum Ausgleich von beim Verändern der Konfiguration der Stufen (5, 6) in die die geschlossene, glatte Fläche bildende Konfiguration auftretenden Längenunterschieden in ihrer Länge veränderbar sind.

7. Not-Evakuierungseinrichtung nach Anspruch 6, **dadurch gekennzeichnet, dass** die Wangen (3, 4) zur Veränderung ihrer Länge mehrere teleskopartig zusammenwirkende Elemente (3a, 3b, 4a, 4b) umfassen.

8. Not-Evakuierungseinrichtung nach Anspruch 6, **dadurch gekennzeichnet, dass** die Wangen (3, 4) zur Veränderung ihrer Länge scherenartig ausgebildet sind.

9. Not-Evakuierungseinrichtung nach Anspruch 5, 6, oder 7, **dadurch gekennzeichnet, dass** die Trittstufen (5) und Setzstufen (6) durch Scharniergelenke miteinander verbunden und in Gleitbahnen beweglich gegenüber den Wangen (3, 4) gelagert sind.

10. Not-Evakuierungseinrichtung nach Anspruch 8, **dadurch gekennzeichnet, dass** die Trittstufen (5) und Setzstufen (6) durch Scharniergelenke miteinander verbunden und in Drehgelenken beweglich gegenüber den Wangen (3, 4) gelagert sind.

11. Not-Evakuierungseinrichtung nach Anspruch 4, **dadurch gekennzeichnet, dass** die Stufenelemente (5, 6) jeweils nur Trittstufen (5) umfassen, die beweglich gegenüber den Wangen (3, 4) gelagert und zum Bilden der Rutsche (2) aus der Konfiguration von Stufen in eine eine geschlossene, glatte Fläche bildende Konfiguration veränderbar sind.

12. Not-Evakuierungseinrichtung nach Anspruch 11, **dadurch gekennzeichnet, dass** die Wangen (3, 4) eine feste Länge aufweisen.

13. Not-Evakuierungseinrichtung nach einem der Ansprüche 1 bis 12, **dadurch gekennzeichnet, dass** die Einrichtung mittels einer Verriegelungsvorrichtung (7) an dem einen Niveau (II; III) verriegelt und nach Lösen der Verriegelungsvorrichtung (7) von dem einen Niveau (II; III) zu dem anderen Niveau (III; II) verlagerbar ist.

14. Not-Evakuierungseinrichtung nach Anspruch 13, **dadurch gekennzeichnet, dass** die Einrichtung mit einer ihre Verlagerungsbewegung hemmenden Brems- oder Dämpfungsvorrichtung und/oder mit einer ihrem Eigengewicht entgegenwirkenden, insbesondere feder- oder gasdruckbelasteten, Balanceeinrichtung gekoppelt und nach Lösen der Verriegelungsvorrichtung (7) von dem einen Niveau (II; III) zu dem anderen Niveau (III; II) verlagerbar ist.

15. Not-Evakuierungseinrichtung nach Anspruch 13 oder 14, **dadurch gekennzeichnet, dass** die Einrichtung mittels einer Verriegelungsvorrichtung (7) an dem oberen Niveau (II) verriegelt und nach Lösen der Verriegelungsvorrichtung von dem oberen Niveau (II) zu dem unteren Niveau (III) verlagerbar ist.

16. Not-Evakuierungseinrichtung nach Anspruch 15, **dadurch gekennzeichnet, dass** die Einrichtung nach Lösen der Verriegelungsvorrichtung (7) durch ihr Eigengewicht von dem oberen Niveau (II) zu dem unteren Niveau (III) verlagerbar ist.

17. Not-Evakuierungseinrichtung nach einem der Ansprüche 13 bis 16, **dadurch gekennzeichnet, dass** die Einrichtung nach Lösen der Verriegelungsvorrichtung (7) durch Federkraft oder durch eine hydraulische oder pneumatische Betätigungseinrichtung von dem einen Niveau (II; III) zu dem anderen Niveau (III; II) verlagerbar ist.

18. Not-Evakuierungseinrichtung nach einem der Ansprüche 1 bis 17, daurch **gekennzeichnet**, dass die Einrichtung zur Not-Evakuierung von Personen von einem das erste Niveau (I) bildenden Deck, insbesondere Passagierdeck (17) eines Nurflügel-Flugzeugs (20) auf wahlweise die das zweite, obere Niveau (II) bildende Oberseite (8) des Nurflügel-Flugzeugs (20) oder die das dritte, untere Niveau (III) bildende Unterseite (19) des Nurflügel-Flugzeugs (20) vorgesehen ist, wobei die Einrichtung an ihrem einem Ende mit dem Deck (17) verbunden und mit dem anderen Ende wahlweise zwischen der Oberseite (18) und der Unterseite (19) oder umgekehrt verlagerbar ist.

19. Not-Evakuierungseinrichtung nach Anspruch 18, **dadurch gekennzeichnet, dass** die Einrichtung in der nicht druckbelüfteten Flügelstruktur (11) des Nurflügel-Flugzeugs (20) angeordnet ist und durch eine in der Druckwand (13) der Kabine (12) vorgesehene Luke (14) zugänglich ist und wahlweise einen Evakuierungsweg von dem Deck (17) zu einer an der Oberseite (18) des Nurflügel-Flugzeugs (20) vorgesehenen oberen Ausstiegsluke (15) oder einer an der Unterseite (19) des Nurflügel-Flugzeugs (20) vorgesehenen unteren Ausstiegsluke (16) bildet.

20. Not-Evakuierungseinrichtung nach Anspruch 19, **dadurch gekennzeichnet, dass** an der unteren Ausstiegsluke (16) eine die Rutsche (2) der Einrichtung nach unten fortsetzende aufblasbare weitere Rutsche vorgesehen ist.

## Claims

1. Device for the emergency evacuation of persons from a first level (I) selectively to a second level (II) that is situated above the first level (I), or to a third level (III) that is situated below the first level, wherein the device for evacuation to the top level (II) comprises an arrangement in the form of stairs (1), wherein one end of the device is connected to the first level (I) and the other end is displaceable between the top level (II) and the bottom level (III) or vice versa, and for evacuation to the bottom level (III) the device is changeable to the shape of a slide (2).

2. Emergency evacuation device of claim 1, **characterized in that** one end of the device is connected at a base point (8), so as to be rotatably held in an articulated manner, to the first level (I), while the other end is pivotable between the top level (II) and the bottom level (III) or vice versa.

3. Emergency evacuation device of claim 2, **characterized in that** the device comprises stringers (3, 4) that are located at opposite longitudinal sides, as well as step elements (5, 6) arranged between the stringers, wherein the step elements (5, 6) for evacuation to the top level (II) comprise an arrangement in the form of stairs (1), and wherein for evacuation to the bottom level (III) the device (1) between the stringers (3, 4) can be changed to the form of a slide (2).

4. Emergency evacuation device of claim 3, **characterized in that** in each case the step elements (5, 6) are designed so that their configuration is changeable, wherein the slide (2) provided for evacuation to the bottom level (III) is formed by changing its configuration by means of the step elements (5, 6).

5. Emergency evacuation device of claim 4, **characterized in that** in each case the step elements (5, 6) comprise steps (5) and risers (6) that are held so as to be movable in relation to each other and movable in relation to the stringers (3, 4), and that for the purpose of forming the slide (2) can be changed from the configuration of steps to a configuration forming a closed smooth surface.

6. Emergency evacuation device of claim 5, **characterized in that**, for the purpose of compensating longitudinal differences that occur during a change from the configuration of the steps (5, 6) to the configuration of the closed smooth surface, the length of the stringers (3, 4) is variable.

7. Emergency evacuation device of claim 6, **characterized in that** for the purpose of changing their length the stringers (3, 4) comprise several telescopically interacting elements (3a, 3b, 4a, 4b).

8. Emergency evacuation device of claim 6, **characterized in that** for the purpose of changing their length the stringers (3, 4) are designed so as to be scissor-like.

9. Emergency evacuation device of claim 5, 6, or 7, **characterized in that** the steps (5) and risers (6) are interconnected by hinge joints and are held in slideways so as to be movable in relation to the stringers (3, 4).

10. Emergency evacuation device of claim 8, **characterized in that** the steps (5) and risers (6) are interconnected by hinge joints and are held in rotary joints so as to be movable in relation to the stringers (3, 4).

11. Emergency evacuation device of claim 4, **characterized in that** the step elements (5, 6) in each case only comprise steps (5) that are held so as to be movable in relation to the stringers (3, 4), and that, for forming the slide (2), can be changed from the configuration of steps to a configuration that forms a closed smooth surface.

12. Emergency evacuation device of claim 11, **characterized in that** the stringers (3, 4) are of fixed length.

13. Emergency evacuation device of any one of claims 1 to 12, **characterized in that** by means of a locking device (7) the device is locked to the one level (II; III), and, after the locking device (7) has been undone, is displaceable from the one level (II; III) to the other level (III; II).

14. Emergency evacuation device of claim 13, **characterized in that** the device is coupled to a braking- or damping device that hinders its displacement movement, and/or to a balance device, in particular a spring-loaded or gas-pressure-loaded balance device that counteracts the intrinsic weight of the device, and that, after the locking device (7) has been undone, is displaceable from the one level (II; III) to the other level (III; II).

15. Emergency evacuation device of claim 13 or 14, **characterized in that** the device is locked to the top level (II) by means of a locking device (7), and, after the locking device has been undone, is displaceable from the top level (II) to the bottom level (III).

16. Emergency evacuation device of claim 15, **characterized in that**, after the locking device (7) has been undone, the device is displaceable from the top level (II) to the bottom level (III) by its intrinsic weight.

17. Emergency evacuation device of any one of claims 13 to 16, **characterized in that**, after the locking device (7) has been undone, the device (7) is displaceable from the one level (II; III) to the other level (III; II) by spring force or by means of a hydraulic or pneumatic actuation device.

18. Emergency evacuation device of any one of claims 1 to 17, **characterized in that** the device is provided for the emergency evacuation of persons from a deck that forms the first level (I), in particular the passenger deck (17) of a blended wing-body aircraft (20), selectively to the top (18), which top forms the second, top level (II) of the blended wing-body aircraft (20), or to the bottom (19), which bottom (19) forms the third, bottom level (III) of the blended wing-body aircraft (20), wherein one end of the device is connected to the deck (17), while the other end is selectively displaceable between the top (18) and the bottom (19) or vice versa.

19. Emergency evacuation device of claim 18, **characterized in that** the device is arranged in the non-pressurised wing structure (11) of the blended wing-body aircraft (20) and is accessible by a hatch (14) provided in the pressure wall (13) of the cabin (12), and selectively forms an evacuation path from the deck (17) to a top exit hatch (15) provided on the top (18) of the blended wing-body aircraft (20), or to a bottom exit hatch (16) provided on the bottom (19) of the blended wing-body aircraft (20).

20. Emergency evacuation device of claim 19, **characterized in that** at the bottom exit hatch (16) an inflatable further slide that continues downwards the slide (2) of the device is provided.

## Revendications

1. Dispositif destiné à évacuer, en cas d'urgence, des personnes à partir d'un premier niveau (I) de manière sélective soit vers un deuxième niveau (II) situé au-dessus du premier niveau (I), soit vers un troisième niveau (III) situé au-dessous du premier niveau, dans lequel le dispositif d'évacuation vers le niveau supérieur (II) comporte un agencement ayant la forme d'un escalier (1), dans lequel le dispositif est relié au premier niveau (I) à une extrémité et peut être déplacé entre le niveau supérieur (II) et le niveau inférieur (III), ou vice versa, à l'autre extrémité, et peut être transformé pour prendre la forme d'un toboggan (2) pour l'évacuation vers le niveau inférieur (III).

2. Dispositif d'évacuation d'urgence selon la revendication 1, **caractérisé en ce que** le dispositif est monté, à une extrémité, de manière rotative et articulée sur un point base (8) sur le premier niveau (I), et peut pivoter entre le niveau supérieur (II) et le niveau inférieur (III), ou vice versa, à l'autre extrémité.

3. Dispositif d'évacuation d'urgence selon la revendication 2, **caractérisé en ce que** le dispositif comporte des limons (3, 4) situés sur des côtés longitudinaux opposés et des éléments de marche (5, 6) agencés entre les limons, dans lequel les éléments de marche (5, 6) comportent un agencement ayant la forme d'un escalier (1) pour l'évacuation vers le niveau supérieur (II), et dans lequel le dispositif peut être transformé entre les limons (3, 4) pour prendre la forme d'un toboggan (2) pour l'évacuation vers le niveau inférieur (III).

4. Dispositif d'évacuation d'urgence selon la revendication 3, **caractérisé en ce que** les éléments de marche (5, 6) sont respectivement conçus de manière à pouvoir changer leur configuration, dans lequel le toboggan (2) prévu pour l'évacuation vers le niveau inférieur (III) est formé en changeant sa configuration par l'intermédiaire des éléments de marche (5, 6).

5. Dispositif d'évacuation d'urgence selon la revendication 4, **caractérisé en ce que** les éléments de marche (5, 6) comportent respectivement des marches (5) et des contremarches (6) qui sont montées de manière mobile les unes par rapport aux autres et de manière mobile par rapport aux limons (3, 4) et qui peuvent être transformées à partir de la configuration de marches pour obtenir une configuration formant une surface lisse fermée afin de former le toboggan (2).

6. Dispositif d'évacuation d'urgence selon la revendication 5, **caractérisé en ce que** la longueur des limons (3, 4) peut être changée afin de compenser des différences de longueur apparaissant lors d'un changement de la configuration des marches (5, 6) pour obtenir la configuration formant la surface lisse fermée.

7. Dispositif d'évacuation d'urgence selon la revendication 6, **caractérisé en ce que** les limons (3, 4) comportent plusieurs éléments coopérant de manière télescopique (3a, 3b, 4a, 4b) afin de changer leur longueur.

8. Dispositif d'évacuation d'urgence selon la revendication 6, **caractérisé en ce que** les limons (3, 4) sont conçus comme des ciseaux afin de changer leur longueur.

9. Dispositif d'évacuation d'urgence selon la revendication 5, 6 ou 7, **caractérisé en ce que** les marches (5) et les contremarches (6) sont reliées les unes aux autres par des articulations à charnière et sont montées dans des glissières de manière mobile par rapport aux limons (3, 4).

10. Dispositif d'évacuation d'urgence selon la revendication 8, **caractérisé en ce que** les marches (5) et les contremarches (6) sont reliées les unes aux autres par des articulations à charnière et sont montées dans des articulations tournantes de manière mobile par rapport aux limons (3, 4).

11. Dispositif d'évacuation d'urgence selon la revendication 4, **caractérisé en ce que** les éléments de marche (5, 6) comportent respectivement uniquement des marches (5) qui sont montées de manière mobile par rapport aux limons (3, 4) et qui peuvent être transformées à partir de la configuration de marches pour obtenir une configuration formant une surface lisse fermée afin de former le toboggan (2).

12. Dispositif d'évacuation d'urgence selon la revendication 11, **caractérisé en ce que** les limons (3, 4) ont une longueur fixe.

13. Dispositif d'évacuation d'urgence selon l'une des revendications 1 à 12, **caractérisé en ce que** le dispositif est bloqué sur le premier niveau (II ; III) au moyen d'un dispositif de blocage (7) et peut être déplacé du premier niveau (II ; III) au second niveau (III ; II) après déblocage du dispositif de blocage (7).

14. Dispositif d'évacuation d'urgence selon la revendication 13, **caractérisé en ce que** le dispositif est couplé à un dispositif de freinage ou d'amortissement entravant son mouvement de déplacement, et/ou à un dispositif d'équilibrage, en particulier chargé par une pression de gaz ou chargé par ressort, contrecarrant son poids propre, et peut être déplacé du premier niveau (II ; III) au second niveau (III ; II) après déblocage du dispositif de blocage (7).

15. Dispositif d'évacuation d'urgence selon la revendication 13 ou 14, **caractérisé en ce que** le dispositif est bloqué sur le niveau supérieur (II) au moyen d'un dispositif de blocage (7), et peut être déplacé du niveau supérieur (II) au niveau inférieur (III) après déblocage du dispositif de blocage.

16. Dispositif d'évacuation d'urgence selon la revendication 15, **caractérisé en ce que**, après déblocage du dispositif de blocage (7), le dispositif peut être déplacé par son propre poids du niveau supérieur (II) au niveau inférieur (III).

17. Dispositif d'évacuation d'urgence selon l'une des revendications 13 à 16, **caractérisé en ce que**, après déblocage du dispositif de blocage (7), le dispositif peut être déplacé du premier niveau (II ; III) au second niveau (III ; II) par une force élastique ou au moyen d'un dispositif d'actionnement hydraulique ou pneumatique.

18. Dispositif d'évacuation d'urgence selon l'une des revendications 1 à 17, **caractérisé en ce que** le dispositif est prévu pour l'évacuation d'urgence des personnes à partir d'un pont qui forme le premier niveau (I), en particulier le pont de passagers (17) d'un avion sans queue (20), de manière sélective soit vers le dessus (8) formant le second niveau, supérieur (II) de l'avion sans queue (20), soit vers le dessous (19) formant le troisième niveau, inférieur (III) de l'avion sans queue (20), dans lequel le dispositif est relié au pont (17) à l'une de ses extrémités et peut être sélectivement déplacé entre le dessus (18) et le dessous (19), ou vice versa, à l'autre extrémité.

19. Dispositif d'évacuation d'urgence selon la revendication 18, **caractérisé en ce que** le dispositif est agencé dans la structure d'aile non pressurisée (11) de l'avion sans queue (20) et est accessible par une écoutille (14) prévue dans la paroi de pression (13) de la cabine (12), et forme sélectivement une voie d'évacuation à partir du pont (17) vers une écoutille de sortie supérieure (15) prévue sur le dessus (18) de l'avion sans queue (20) ou vers une écoutille de sortie inférieure (16) prévue sur le dessous (19) de l'avion sans queue (20).

20. Dispositif d'évacuation d'urgence selon la revendication 19, **caractérisé en ce que** sur l'écoutille de sortie inférieure (16) est prévu un toboggan supplémentaire gonflable qui prolonge le toboggan (2) vers le bas.
